# EUROPEAN PATENT APPLICATION

(11) **EP 1 130 522 A2**
(43) Date of publication of application: **05.09.2001**
(21) Application number: 01301792.6
(22) Date of filing: 27.02.2001
(51) Int. Cl.: G06F 13/28

(54) **Method and apparatus for DMA data transfer**

(30) Priority: 29.02.2000 GB 0004867
(71) Applicant: Virata Limited, Cambridge CB3 0BL (GB)
(72) Inventor: Francis, Nicholas James, Cambridge, Cambridgeshire CB4 2UG (GB)
(74) Representative: Cozens, Paul Dennis

(57) **Abstract**

A method and apparatus for making DMA transfers where the DMA engine runs autonomously, thereby reducing the extent of dependence on a controlling processor. The processor determines when there are blocks of data, in a data stream, which could form similar or repetitive DMA transfers and supplies information regarding such transfers to a DMA engine. This enables the DMA engine to run autonomous so that successive blocks of data are cyclically transferred to memory.

## Description

This invention relates to a method and apparatus for making DMA transfers, e.g. where a DMA engine is used in transferring blocks of data (from a data stream) to and from memory. Such DMA transfers are usually controlled by a DMA controller which in turn is controlled by a processor (CPU). The invention can be used to make the DMA engine run autonomously, thereby reducing the extent of dependence on a controlling processor and hence enabling appreciable cost savings to be made. The invention can be applied particularly, but not exclusively, to an Asymmetrical Digital Subscriber Loop (ADSL) communication system, where it can be used in a data Stream Processing Unit (SPU) of an ASIC designed for data switching. However, the invention can be applied more broadly where there is a need for repetitive data transfer. The DMA engine may also be extended to support alternative applications such as dropping of received data samples between buffers; and insertion of extra transmit samples in a transmit data stream; reverse addressing (for re-ordering data in memory to help in Fast Fourier Transform (FFT) calculations with Digital Signal Processors (DSPs); and programmable interrupt generation on completion of any buffer transfer.

A Direct Memory Access (DMA) transfer occurs when data is moved directly between an interface and the memory of a system, and is generally the fastest and simplest way of moving data around a system. DMA transfers are typically achieved by means of a DMA controller (DMAC) which supplies a source and destination address for the data transfer.

The DMAC is generally a complex system which may be made up of a controlling processor or software controlled hardware including registers and gate arrays for ordering the flow of data, to and from memory. The complete system for transferring data is generally known as the DMA engine which comprises the DMAC and the data transfer system. The DMAC and DMA engine are widely known in the art and require no further detailed description.

An example of a DMA engine is disclosed in US 5,708,779 (Multimedia system and method of controlling data transfer between a host system and a network adaptor using a DMA engine), to which reference is made for further details of construction and operation.

As explained in US 5708779, DMA engines (136,138,140,142) cooperate with a controller (122) to control the delivery of data between the system and the local bus through an internal 64-byte FIFO register. Each DMA engine issues bus master requests to a micro channel interface for data delivery. It is also issues bus master requests to a local bus interface for data delivery and descriptor fetches. The local processor interfaces with the DMA engine through a chain of link descriptor lists. The system interface contains a DMA engine descriptor pointer that locates the descriptor list in local bus memory. The system interface also contains a write bit 1-byte status register through which status is returned.

More particularly, the DMA engine issues each request to a local bus interface to fetch a descriptor from local memory, including a byte count field which indicates a source and destination for data transferred between the system and local bus. It then issues a request to the system and local bus interface, using the descriptor, which causes (a) the source to load a FIFO buffer and (b) the destination to unload the FIFO. It also issues a request when the descriptor byte count is zero to cause the destination to empty the FIFO. Then the DMA fetches the next descriptor link to the previous descriptor and issues a request to the system and local bus interface for the source to load the FIFO and the destination to unload the FIFO using the next descriptor.

Thus, when a DMA transfer occurs in this prior art system, the amount of data and the location of the data in the memory needs to be supplied by the DMA controller to the DMA engine for each DMA transfer. Thus, before the DMA controller can issue a request to the DMA engine, it has to check the following conditions:
1. Is a current transfer complete (i.e. is the DMA engine ready for transferring new data)?
2. Is a destination for the new data in the transfer ready to receive the new data?
3. Is the source of new data ready to transmit the new data?

These checks are acceptable where each DMA transfer is unique and the DMA engine needs to be set up individually for the conditions existing at the time of DMA transfer. However, the present invention recognises that where DMA transfers are similar or repetitive, and where data rates are known and controllable, such checking, which requires intervention by a DMA controller, is an unnecessary, time-consuming and expensive overhead.

The invention provides a method for making DMA transfers between a memory and data stream under the control of a DMA engine, the method including the steps of:
(a) using a processor to determine when there are blocks of data in the data stream which could form repetitive DMA transfers;
(b) supplying information, from the processor to the DMA engine, relating to the number of data blocks, their location (either source or destination depending upon whether for transmit or receive) in memory, their size and the spacing of the blocks in the data streams;
(c) making the DMA engine autonomous so that a predetermined number of data blocks in memory are caused to circulate in a loop whereby data blocks in memory can be read by another part of the overall system before being overwritten by data blocks in the next cycle;
(d) making the DMA engine autonomous so that a predetermined number of data blocks in memory are caused to circulate in a loop whereby data blocks in memory can be set up by another part of the overall system before being transmitted in the data stream in the next cycle;
(e) leaving the DMA engine to operate repetitively and autonomously without any intervention from a DMA controller;
(f) terminating autonomous operation of the DMA engine when the processor determines that blocks of data in the stream do not form similar or repetitive DMA transfers; and
(g) returning control of the DMA transfers to the processor.

Thus, by setting up the DMA engine with a number of DMA transfers (depending on the number of transfers within the loop) the DMA engine can be left to run without controller intervention. This avoids the need for a DMA controller to check the above-mentioned conditions before it issues a request to the DMA engine, and hence the DMA controller is, or can be made temporarily, redundant. This autonomous operation can be maintained over significant periods of time, thereby no time is wasted by the processor performing these repetitive tasks. The overhead of DMA transfers can therefore be appreciably decreased and the processor can be freed up to perform other tasks. The method is particularly useful where a fixed rate data stream can be used to control data transfer rates.

Blocks (or symbols) of data in the stream (of samples), which would form similar or repetitive DMA transfers, could each have a constant number of samples and be separated by a constant number of samples. This structure is well suited to this type of DMA engine, particularly where the sample rate in the data stream is constant.

The invention can be applied particularly, but not exclusively, to an Asymmetric Digital Subscriber Loop (ADSL) communication system, this system being falling within the xDSL family, e.g. where it can be used in conjunction with a Digital Signal Processing (DSP) unit of an ASIC designed for data switching. In such an application, blocks of data in the form of symbols are sent between stations, the symbols having a fixed length (64 samples for transmit, and 256 samples for receive; the intersymbol gap being 4 samples wide for transmit, 16 samples wide for receive). The data in these symbols is distributed and transmitted in carrier channels of predetermined bandwidth (often referred to as "bins") which are established when making a communication link between stations. Each channel or bin can theoretically support a number of data bits, but due to the spectral response of the communication link (e.g.telephone line) this maximum may not be able to be reached. The system uses a bit loading table, which is tailored to the characteristics of the respective channel, to distribute the data bits into these channels and hence transmit a data stream on the link. When this data stream is received, it is stored and processed in order to reconstruct the original digital signal.

The processor can be programmed to determine when there are suitable blocks of data in the stream, e.g. when it detects a fixed rate data steam, or constant data blocks with constant spacing, so that the DMA engine can be switched to autonomous mode and later switched back to DMA controller mode (where checks are necessary). In the autonomous DMA mode, the fixed rate data stream is used to control the data transfer rate.

Changes to DMA parameters are permitted which have either a permanent effect or will restore original DMA parameters after the new parameters have been used once.

An embodiment of the invention will now be described with reference to the accompanying schematic drawings, in which:
Figure 1 is an overview of a typical xDSL receiver;
Figure 2 is an overview of a typical xDSL transmitter;
Figure 3 schematically shows a system including a processor, memory, I/O and DMA controller;
Figure 4 shows a typical arrangement of receive buffers in memory;
Figure 5 shows a typical arrangement of receive buffers in memory;
Figure 6 shows a typical arrangement of transmit buffers in memory;
Figure 7 shows a portion of the data stream;
Figure 8 shows a portion of another data stream;
Figure 9 shows a portion of another data stream;
Figure 10 shows a portion of another data stream;
Figure 11 shows data transfer by a DMA engine between four control registers and four corresponding buffers in memory;
Figure 12 shows data transfer by an autonomous DMA engine where four control registers in the DMA engine correspond to the four buffers in memory and where all four registers are set up in a loop;
Figure 13 shows a modification to the embodiment of Figure 11;
Figure 14 shows another embodiment where each DMA address register (which corresponds to a single data buffer) can use reverse addressing;

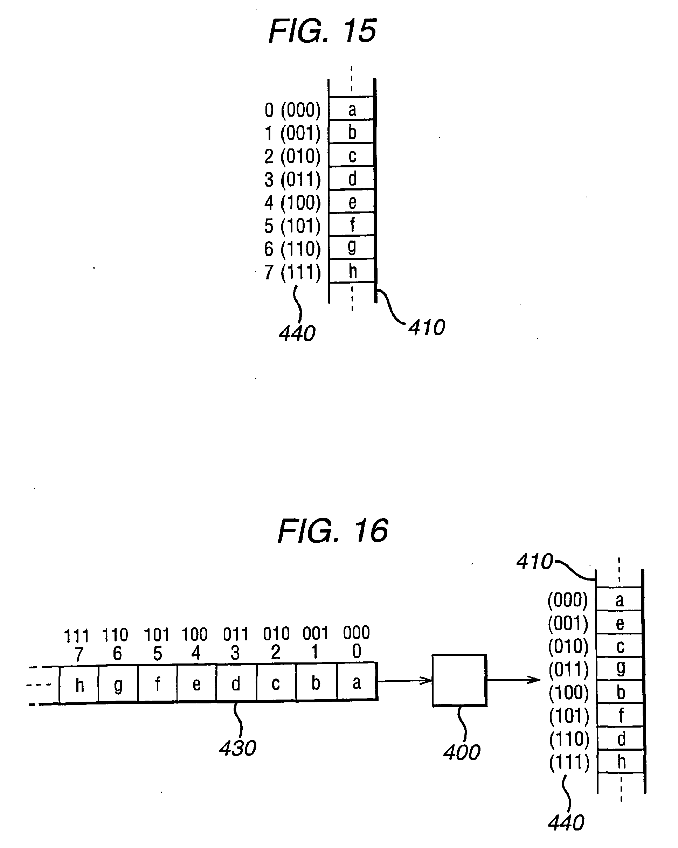

Figure 15 shows the storage of eight samples in memory;
Figure 16 shows a different arrangement of eight samples in memory;
Figure 17 illustrates the recombination of one set of data fragments in memory; and
Figure 18 illustrates the recombination of two sets of data fragments in memory.

A preferred embodiment of the invention is described below in connection with an xDSL (digital subscriber line) communications system. However, it will be understood that the invention can be more broadly applied to systems other than xDSL. The invention finds particular utility in any system involving the processing or generation of a data stream containing a plurality of parts which repeat in a substantially predictable fashion, or in any system where a data stream is to be transferred to or from a set of buffers in a predictable fashion. In particular, communication systems which employ ATM switches for transmitting and receiving data streams, between work stations connected to a network or otherwise, are suitable applications for the invention, in view of the nature of the data transmitted.

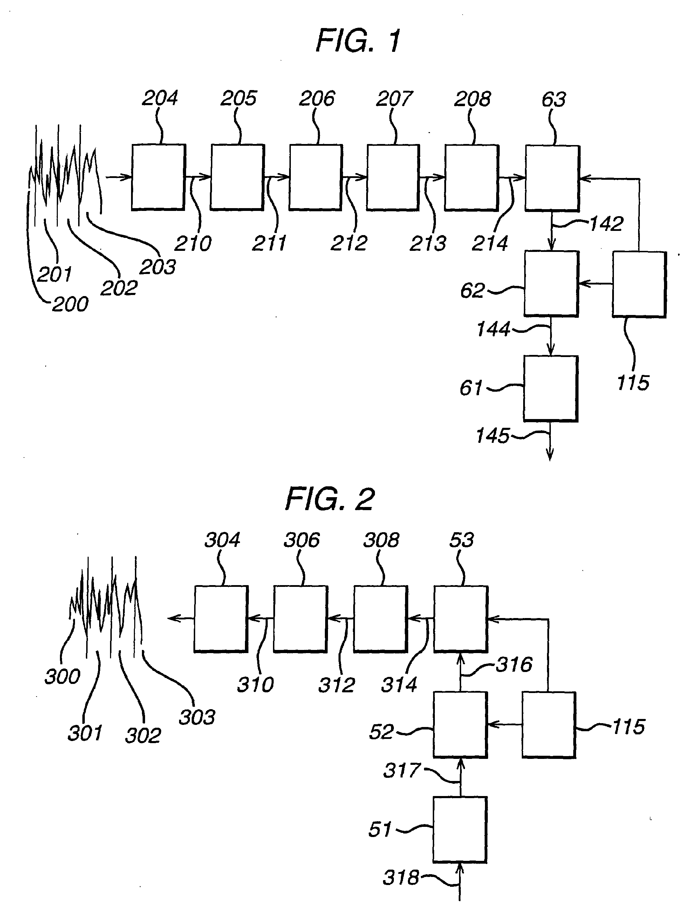

With reference to the drawings, Figure 1 shows an overview of a typical xDSL receiver, taking as its input received electrical signals 200, and producing at its output a received data stream 145. The sequence of received symbols, 201, 202, 203 is sampled by the ADC 204 at a substantially fixed sampling rate, to produce a stream of samples 210. The sample stream is then downsampled using a downsampler 205, and passed through a traversal equaliser 206. The resultant sample stream 212 is then processed by an FFT 207 using n frequency bins, such that each carrier tone in the signal maps to a distinct frequency bin in the FFT.

The output 213 of the FFT comprises a sequence of n pairs of amplitudes (of in-phase and quadrature components in each frequency bin), which are then processed by a frequency domain equaliser 208 to correct for phase shifts. The amplitude pairs 213 then feed into a decoder unit 63, which, using a table of carrier channel bit allocations 115, converts the amplitude pairs into variable-length sequences of bits 142 using known QAM decoding techniques. The bits are then combined by the combiner 62 to produce an output stream of fixed-length data words 144. For the reason of avoiding problems with latency, amongst other things, an output buffer 61 is provided, which stores the output data words in memory when the memory bus is free.

Figure 2 shows an overview of a typical xDSL transmitter, taking as its input a transmitted sample stream 318, and producing at its output the transmitted electrical signals 300. The output data words 318 are held by the input buffer 51 until the slicer 52 is ready to receive them. The slicer 52 then outputs variable-length sequences of bits 316 according to the table of channel bit allocations 115, and the QAM encoder then produces one amplitude pair per sequence of bits. The amplitude pairs 314 then feed into the iFFT (inverse FFT) 308, which creates a sample stream 312 at some multiple of the symbol rate. The upsampler 306 produces a higher sampling rate sample stream 310, which is then output by the DAC 304 as the transmitted symbols 300.

In the preferred embodiment, with the exception of the FFT and iFFT blocks, all of the processing stages are implemented in hardware with a software controller overseeing the various stages. This division between software and hardware offers fast processing where it is required, yet retains a considerable amount of flexibility. It should be noted, however, that all of the stages other than the ADC 204 and DAC 304 may be implemented solely or substantially in software, subject to the availability of sufficient processing power, or wholly or substantially in hardware. It is also possible to add, move or remove various of the processing stages described above; for example, additional down-sampling stages may be added in the receiver, possibly in conjunction with mechanisms to compensate for phase errors due to a mismatch between an internal and external clock, and equalisation may be achieved by different means. Also, some extra complexity is required in the receiver and transmitter on account of the required intersymbol gaps.

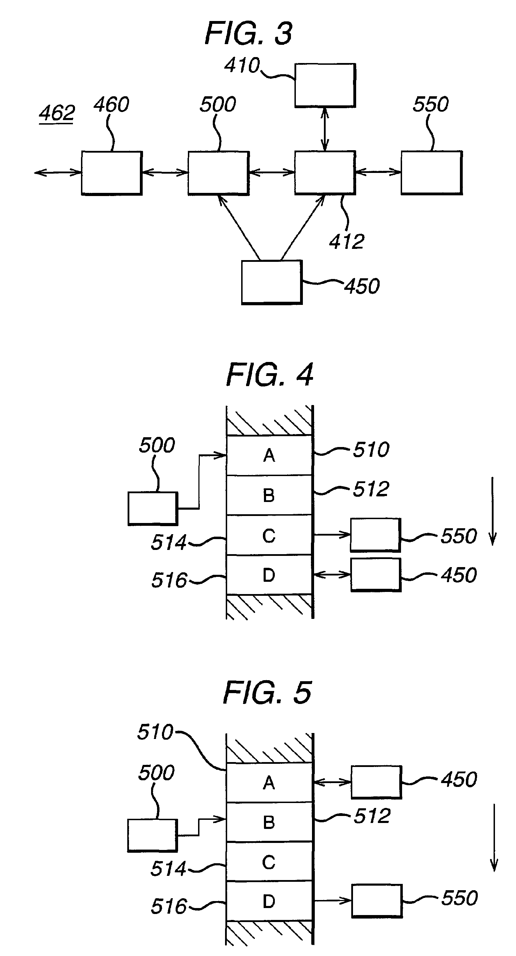

Figure 3 shows the layout of part of a typical xDSL communications system. The memory bus 412 interconnects the processor 450, the memory 410, the DMA controller 500 and an I/O device 460. The I/O device receives and transmits the bi-directional data stream 462, which in the preferred embodiment comprises the output sample stream and input sample stream. After data has been transferred to the memory 410, the data is processed using a DSP 550 which may perform FFT or iFFT (functions 207 and 308) or other required calculations on symbols of data before passing on to other parts of the system.

The principal purpose of the DMA controller 500 is to transfer large amounts of data from the I/O device 460 into memory 410 and vice versa with as little input as possible from the processor 450. In the absence of the DMA controller, the processor would have to coordinate the transfer of data itself, which would take longer to transfer the same amount of data and would waste processing time. The principal function of the processor 450 in the preferred embodiment is to control the data flow shown in Figures 1 and 2, although it could perform other processing tasks relating to the data stream, or other tasks not directly related to processing the data stream.

With reference to Figure 4, blocks of the input data stream are transferred by the DMA controller 500 into one of the four receive buffers A 510, B 512, C 514 and D 516 in memory 410. As will be discussed in more detail later, at any one time, the DMA controller 500 will be writing to one of the buffers (in this case A 510), the DSP 550 will be processing the data in another buffer (in this case D 516), and a second data transfer, coordinated by the processor 450, will be occurring out of a third buffer (in this case C 514). The remaining buffer (in this case B 512) is spare and is used in the event of a delay in the processing of buffer D 516 or optional second DMA transfer out of buffer C 514.

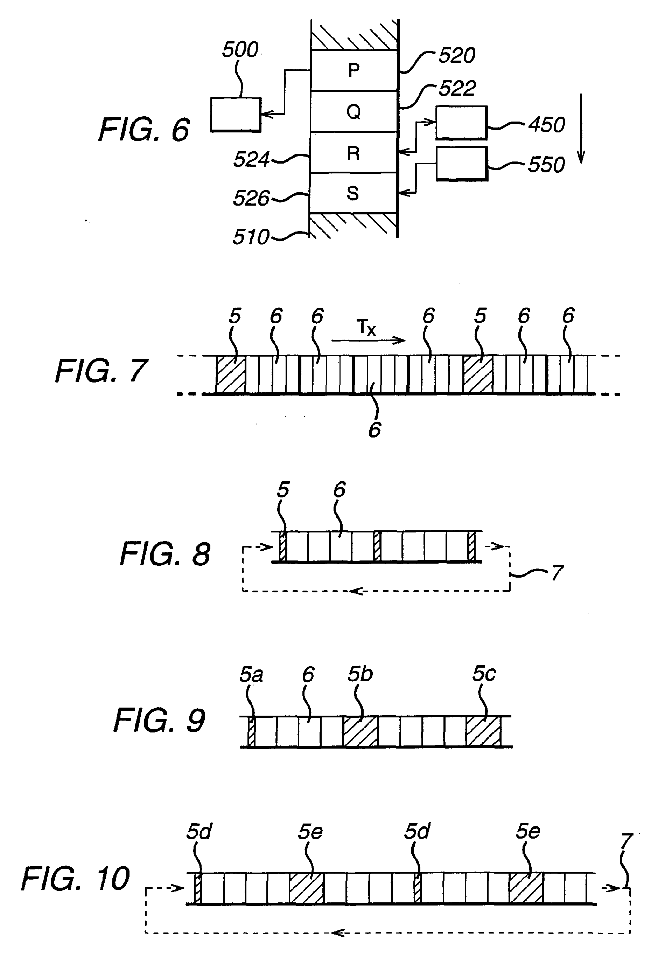

Figure 5 shows the movement of data in and out of the memory when the next block of data arrives, and the DMA controller 500 and processor 450. The presence of the spare buffer (B 512 in Figure 4 and C 514 in Figure 5) means that the DMA controller 500, DSP 550 and processor 450 (transferring data out of memory) do not need to switch buffers at exactly the same moment, but processor 450 may need to wait for the DSP 550 to complete processing its current buffer before reading from that buffer.

Figure 6 illustrates the transmit buffers P 520, Q 522, R 524 and S 526. These operate on similar principles to the receive buffers, at least as far as buffer switching is concerned.

For the avoidance of doubt, the term 'DMA engine' as used herein refers to those elements in the CPU 450, DMA controller 500, I/O device 460, memory 410 which provide the entire DMA functionality; the precise distribution of this functionality may vary according to the implementation, with the CPU 450 able to perform at least some of the functions which are carried out in the preferred embodiment by the DMA controller 500, for example.

As mentioned above, the transmitted and received symbols 200 and 300 are separated by intersymbol gaps, containing a cyclic prefix addition which allows a certain margin of error in timing when transmitting and receiving. Initially the receiving end of the link has to find the symbol boundary. This is done by the transmitter sending a fixed pilot tone. The hardware and software described above can be used to define the error in the symbol boundary. The DMA engine can then be used to synchronise to the new symbol boundary by a one time change to the intersymbol gap. The advantage of this DMA engine is that these one time changes are simple to perform and after they have been done the old parameters are restored to continue transferring standard symbols of fixed length with fixed intersymbol gaps. Small timing errors between a receiver and a transmitter across a link (the two 'stations') are detected, and can be corrected by various means, including phase compensation, by inserting or deleting samples in the data stream.

A data stream arriving at an xDSL will be sorted, addressed and stored as blocks of data in buffers in memory by the DMA engine. Part of this initial process is schematically illustrated in Figures 3 and 7, i.e. where CPU 450 co-operates with DMA engine 500 in order to sort, address and load input data into memory 410. The memory includes buffers for blocks of data wherein each block 4 contains e.g. four samples of data, and there are four such blocks between each gap (four samples long) containing the cyclic prefix addition. In the data stream illustrated in Figure 7, the shaded blocks 5 represent gaps between each data block 6 containing four samples. This is shown for the transmit buffers of memory 410; the same applies in principle to the receive buffers, but in this case 256 samples are received and the intersymbol gap is nominally 16 bytes long.

With conventional operation, as in US 5708779, a CPU 450 determines the relative position of data blocks 6 in order to control the DMA engine 500, whereby the blocks of data are transferred between an I/O device 460 and buffers in the memory 410. The processor 450 supplies information continuously regarding the location of data in the stream. The present invention recognises that this is an unnecessary overhead, especially where blocks of data are present in the stream which could form similar or repetitive DMA transfers. In these circumstances, the same pattern of DMA transfers can occur regularly over significant periods of time. The invention employs the processor (CPU) 450 to detect such an event and to cause the DMA engine to operate autonomously.

Referring to Figure 8, this shows an instance where four blocks of data 6 are separated by a gap 5 having a constant sample width and where the DMA engine no longer requires the CPU 450 to supply it with control information. The CPU 450 then instructs the DMA controller 500 to act autonomously and repeatedly so that blocks of data are cyclically transferred between buffers or registers in memory 410 in accordance with the same repeating pattern. This is schematically illustrated in Figure 8 by the loop 7.

Autonomous control will be interrupted when, as shown in Figure 9, the gaps 5a, 5b, 5c are a different length. In this case, the CPU 450 needs to intervene and delay the DMA transfer by an appropriate amount; autonomous control cannot then be exercised. This difference in intersymbol gap sizes can occur, for example, when synchronisation between the stations starts to drift because local clocks are not running at the same rate, or during the training phase where the symbol boundary has yet to be defined.

However, it is not necessary (for autonomous control) to have blocks of data separated by gaps 5 of a constant sample width, because the CPU 450 may detect a cyclic phase error with a repetitive pattern, for example, like that shown in Figure 10 where the first gaps 5d have a width of four samples and the second gaps 5e have a width of fourteen samples, but they alternate regularly (giving the sequence 4, 14, 4, 14...). The CPU can recognise such a repetitive pattern in order to make DMA engine autonomous; as indicated by the loop 7 in Figure 10. Thus, where some cyclic difference occurs between the operation of the stations, a correction can be applied cyclically in order to compensate for this and to retain autonomous operation of the DMA engine.

In ADSL, communication is asymmetric, whereby more memory is required for reception and transmission, and the intersymbol gaps are of different widths. Signals for transmission are also subject to fast fourier transformations (FFT) whereby the frequency spectrum is split into 4 kHz carrier channels known as "bins". As has already been explained, each bin holds a varying number of bits due to losses, distortion errors etc. occurring in the respective channels in the transmission/reception process and the data stream is composed of consecutive samples from these bins. A pilot tone is also transmitted in one bin, and this is used for the purpose of synchronisation. If the receiver detects this pilot tone, but with a different frequency or phase, the error signal can be generated that represents the difference between transmitter/receiver clocks. This can be used to generate variable length cyclic prefix additions for adjusting the synchronisation between the transmitter and receiver.

In the case of ADSL communication, each buffer in memory 410 is generally set up so as to contain a block of data including address/data length/prefix, whereby data can be stored and accessed from memory in accordance with requirements by the DMA engine. However, in the case of "reverse addressing", data from the CPU is subject to fast fourier transformation (FFT) requiring the DMA to store data in memory in reverse addressed form, i.e. the address bits being reversed.

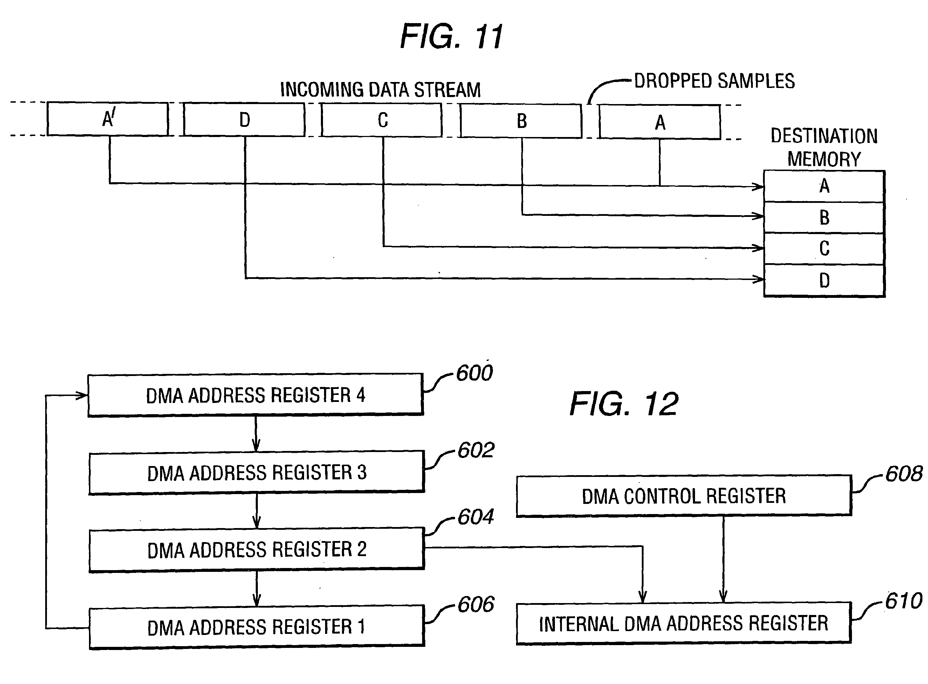

Figure 11 shows a received data stream containing 5 symbols of data (A,B,C, D and A') with a fixed gap between the symbols. These symbols are transferred to the destination memory by the DMA engine. This process is repetitive (A' will be moved to the same location as symbol A) so only four DMA registers are required.

The DMA Controller 500 includes five externally-programmable registers 600, 602, 604, 606 and 608 for controlling the DMA transfer, and one internal register 610, as illustrated schematically in Figure 12. The internal DMA Address register 608 contains details of the current DMA transfer (e.g. size, location, interrupt generation, identifier) and also contains the number of samples to drop before starting the next buffer. In this case the symbol size is fixed at 256 samples with a 16 sample intersymbol gap.

The fifth (control) register 608 can be used to override the internal DMA Address Register 610 for the next buffer only. When this control register is set the number of samples to drop after the next symbol, amongst other things, can be altered for the next DMA transfer only.

In Figure 12, when the current transfer completes the contents of the second register 604 will be copied into the internal DMA address register 610 unless the control register 608 has been set, in which case the temporary settings will be used. The DMA address registers continue to cycle round so that the old values are retained for future use. In this way the control register settings affect just the next buffer, but when the DMA settings are recycled the original settings are restored. This allows a change to the number of samples to be dropped (or any other parameter if required) to be applied once only. In other words, if the control register 608 is not set, the next register to be used (copied into the internal register 610) will be the third address register 602, then the fourth address register 600, then the first register 606, and so on.

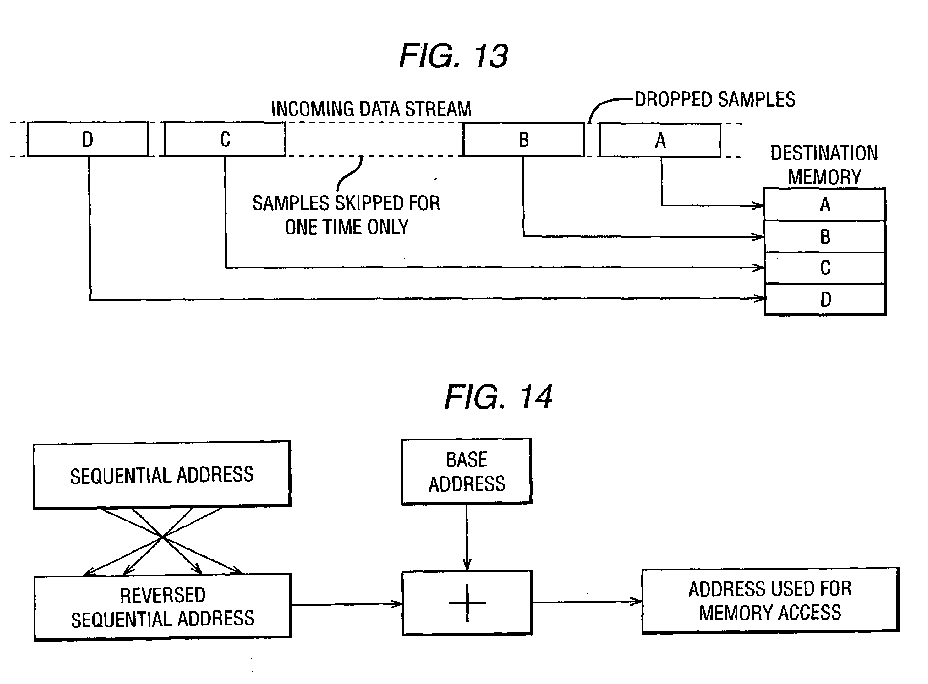

Fig. 13 shows this change in the number of dropped samples where samples are skipped for one time only. This is particularly useful in data transfer applications where the receiver has to resynchronise its local clock to the transmitter clock. For example, in G.992 data transfers in the Beryllium ASIC of the Applicant company. In this case the modem end has a local clock and has to resynchronise the symbol boundaries to a central office by using a tone frequency. This DMA architecture allows the intersymbol gap to be adjusted easily to account for any differences in the two clocks.

Each DMA address register 600, 602, 604, 606, 608 or 610 (which corresponds to a single data buffer) may use reverse addressing. In this mode the address of the memory location is bit reversed which can be useful for calculating FFTs or iFFTs (allows sequential memory access which reduces memory access time). Figure 14 shows how the address in memory is made up when using reverse addressing.

The number of address registers provided in the DMA controller, and hence numbers of buffers available, has been chosen for optimal performance in a specific context. However, the number of address registers used may easily be varied up or down, and it is possible to use only one address register. Alternatively, it is relatively straightforward to implement a certain number of address registers, but only cycle through a subset of these, to provide a dynamically variable number of buffers.

A further modification to the DMA controller is possible, to allow the address registers to be incremented automatically after they are used, by an amount corresponding to the amount of data transferred. In this way, one or more distinct data sub-streams interleaved within the main data stream can be extracted and recombined in memory by the DMA engine. An equivalent behaviour can be obtained by programming a sequence of address registers in the DMA controller with each address offset by the appropriate amount, and only letting the DMA engine run for one round of transfers, before it loops.

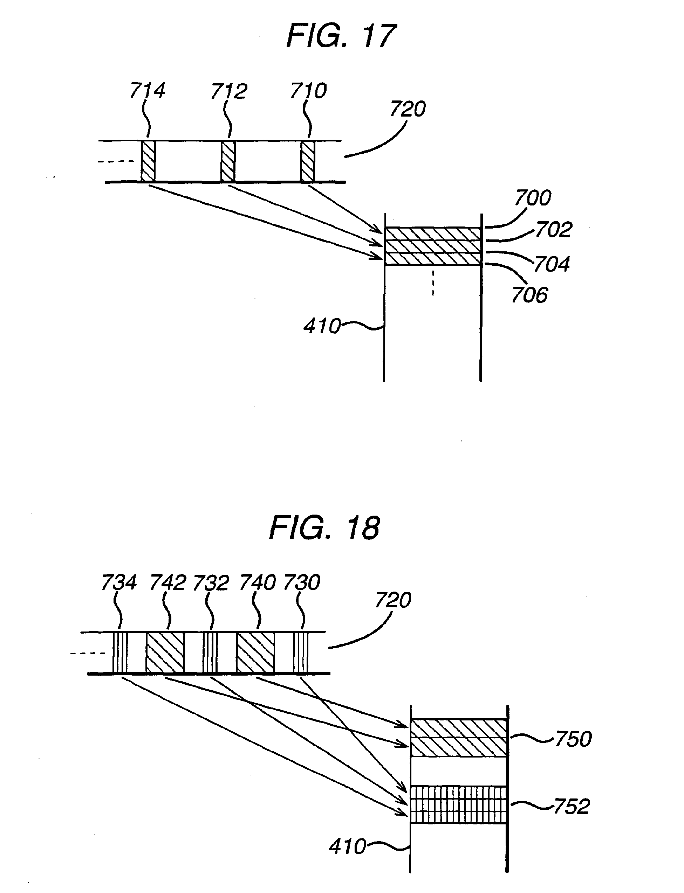

Figure 17 shows an example of recombining data fragments 710, 712, 714 from a data stream 720; this example can be implemented by either of the methods described immediately above. However, in the case where a single address register is used, the address register is initially set to point to the address 700 in memory 410 of the beginning of the buffer where the data is to be recombined. The first data fragment 710 is transferred to the address 700, and the address register is then incremented by the size of the data fragment, such that it now contains a new address 702. The second data fragment 712 is then transferred in turn to this address, the address register is incremented to point to the new address 704, and so on.

Figure 18 shows an example of independently recombining two data sub-streams 740, 742 and 730, 732 and 734 into the two buffers 750 and 752 in memory. This can be achieved either by using two address registers in the DMA controller which auto-increment in the manner described above, or by using any number of address registers, reprogramming them at appropriate times. For example, in the latter case, with the standard four address registers 600, 602, 604 and 606, these registers would be set up with the addresses of the four blocks 730, 740, 732 and 742, and the DMA engine would then be set to run for four transfers. The addresses with then be set again by the processor to transfer the next four blocks, etc.

Reference is also made to our copending applications entitled:
xDSL Sample rate Conversion using Phase Balancing
QAMD, and
Digital Signal Processing for FIR Filtering;
   with which this invention can be applied in any combination.

## Claims

1. A method for making DMA transfers between a memory and data stream under the control of a DMA engine, the method including the steps of:
(a) using a processor to determine when there are blocks of data in the data stream which could form repetitive DMA transfers;
(b) supplying information, from the processor to the DMA engine, relating to the number of data blocks, their location (either source or destination depending upon whether for transmit or receive) in memory, their size and the spacing of the blocks in the data streams;
(c) making the DMA engine autonomous so that a predetermined number of data blocks in memory are caused to circulate in a loop whereby data blocks in memory can be read by another part of the overall system before being overwritten by data blocks in the next cycle;
(d) making the DMA engine autonomous so that a predetermined number of data blocks in memory are caused to circulate in a loop whereby data blocks in memory can be set up by another part of the overall system before being transmitted in the data stream in the next cycle;
(e) leaving the DMA engine to operate repetitively and autonomously without any intervention from a DMA controller;
(f) terminating autonomous operation of the DMA engine when the processor determines that blocks of data in the stream do not form similar or repetitive DMA transfers; and
(g) returning control of the DMA transfers to the processor.

2. A method according to claim 1, wherein a fixed rate data stream is used to control data transfer rates.

3. A method according to claim 1 or 2, wherein the data blocks comprise symbols in a data stream of samples (which form said similar or repetitive DMA transfers), and wherein each block has a constant number of samples and is separated from another by a constant number of samples, and the sample rate in the data stream is constant.

4. A method according to any preceding claim applied an Asymmetric Digital Subscriber Loop (ADSL) communication system, blocks of data in the form of symbols are sent between stations, the symbols having respective fixed lengths for transmit and receive, the symbols being spaced by intersymbol gaps having a respective sample widths, and the symbols being transmitted in carrier channels of predetermined bandwidth (or bins) which are established when making a communication link between stations, the system using a bit loading table tailored to the characteristics of the respective channels, whereby data bits are distributed into these channels and hence transmit a data stream on the link.

5. A method according to claim 4, wherein the processor is programmed to determine when there are suitable blocks of data in the stream, e.g. when it detects a fixed rate data stream, or constant data blocks with constant spacing, so that the DMA engine can be switched to autonomous mode and later switched back to DMA controller mode (where checks are necessary).

6. A method according to claim 5, wherein, in the autonomous DMA mode, the fixed rate data stream is used to control the data transfer rate.

7. A method according to any preceding claim wherein changes to DMA parameters are permitted which have either a permanent effect or will restore original DMA parameters after the new parameters have been used once.

8. A method for making DMA transfers where a processor is used to determine when there are blocks of data, in a data stream, which could form similar or repetitive DMA transfers and to supply information regarding such transfers to a DMA engine, characterised by making the DMA engine autonomous so that successive blocks of data are cyclically transferred to memory until the processor determines that blocks of data in the stream do not form similar or repetitive DMA transfers.

9. A method of making DMA transfers including the steps of:
(a) using a processor to control a flow of data in a data stream, the processor being programmed to determine whether blocks of data are present, in the data stream, which could form similar or repetitive DMA transfers;
(b) using the processor to supply information to a DMA engine, relating to a set of buffers and to the size and spacing of the data blocks in the stream, whereby the DMA engine autonomously transfers successive data blocks into the set of buffers in a cyclic fashion, whereby data blocks in respective buffers can be read before it is overwritten by data blocks in the next cycle;
(c) terminating autonomous operation of the DMA engine when the processor determines that blocks of data in the stream do not form similar or repetitive DMA transfers; and
(d) returning control of the DMA transfers to the processor.

10. A method for making DMA transfers to a destination address in memory under the control of a DMA engine, the method including the steps of:
(a) using a processor to control a flow of data in a data stream, the processor being programmed to determine whether blocks of data are present, in the data stream, which could form similar or repetitive DMA transfers;
(b) using the processor to supply information to a DMA engine, relating to a buffer and to the size and spacing of the data blocks in the stream, whereby the DMA engine autonomously transfers a predetermined number of successive data block into the buffer in a cumulative fashion, whereby data blocks are assembled in the buffer;
(c) terminating autonomous operation of the DMA engine when the processor determines that either blocks of data in the stream do not form similar or repetitive DMA transfers, or a the predetermined number of data blocks have been transferred to the buffer; and
(d) returning control of the DMA transfers to the processor.

11. A method according to claim 10 or 11, in which the address for storing data in a, or the buffer relative to the beginning of the buffer is bit reversed, whereby the data blocks are sorted without processor intervention.

12. A method according to any preceding claim, wherein the processor determines when the blocks of data are separated by gaps of a constant width, whereby the DMA engine is made autonomous.

13. A method according to any preceding claim, wherein the processor determines when the blocks of data and gaps between the blocks form a repetitive pattern whereby the DMA engine is made autonomous.

14. A method of ADSL (asymmetric digital subscriber loop, or link) communication where blocks of data in the form of communication symbols are sent between stations, the symbols being spaced by an intersymbol gap and having a fixed length, data in the symbols being distributed and transmitted in carrier channels of predetermined bandwidth (or bins), the bins being established when making a communication link between stations, each bin supporting a given number of bits due to the spectral response of the communication link, and the system using a bit loading table to distribute the data bits into the bins prior to transmitting a data stream on the link; and where the data stream is received, stored and processed in order to reconstruct the original digital signal;
the method including the use of a CPU to respond to a cyclic prefix addition in the intersymbol gap so as to control the DMA engine, whereby the DMA engine shifts data blocks around in memory while processing an input(or output) data stream so that, when the data stream arrives at a work station, it can be sorted, addressed and stored as blocks of data in buffers in memory by the DMA engine and then used in reconstructing the digital data.

15. A communication adapter including a DMA engine for transferring data to and from memory, the adapter further comprising:
a processor, memory, DMA controller and memory bus;
a plurality of DMA address registers connected in a loop to enable the contents of the registers to be circulated in a loop;
an internal DMA address register for receiving sequential contents of DMA address registers, whereby data is unloaded from the loop; and
a DMA control register for controlling the operation of the DMA engine;
whereby (a) data input can be loaded into the DMA address register loop, and (b) data can be repetitively unloaded from the loop, whereby the DMA engine operates autonomously without the intervention of a DMA controller.

16. A substrate having recorded thereon information in computer readable form for controlling the transfer of data under processor control, said computer readable information enabling a DMA engine to operate autonomously by causing a predetermined number of DMA transfers to circulate in a loop whereby the DMA engine can run repetitively and autonomously without intervention from a DMA controller.
